# EUROPEAN PATENT SPECIFICATION

(11) **EP 3 342 281 B1**
(45) Date of publication and mention of the grant of the patent: **16.12.2020**
(21) Application number: 16838143.2
(22) Date of filing: 16.08.2016
(51) Int. Cl.: A01K 45/00

(54) **METHOD FOR DETERMINING AND MANAGING THE VOLUME AND CONCENTRATION OF SANITISER OPTIMISED FOR USE IN A METHOD FOR DISINFECTING AN INTRA-OVUM SUBSTANCE APPLICATION MODULE, WITH INFORMATION ON THE AVERAGE SIZE OF THE VACCINATED AND/OR FED FERTILE EGGS BEING USED AS THE PARADIGM**
VERFAHREN ZUR BESTIMMUNG UND VERWALTUNG DES VOLUMENS UND DER KONZENTRATION EINES OPTIMIERTEN ENTKEIMERS ZUR VERWENDUNG IN EINEM VERFAHREN ZUR DESINFEKTION EINES INTRAOVUMS
PROCÉDÉ D'OBTENTION ET DE GESTION DE VOLUME ET DE CONCENTRATION D'ASEPTISANT OPTIMISÉ, TROUVANT UNE APPLICATION DANS LE PROCÉDÉ DE SÉDINFECTION D'UN MODULE D'INTRODUCTION DE SUBSTANCE IN OVO, AVEC COMME PARADIGME L'INFORMATION SUR LA TAILLE MOYENNE DES OEUFS FERTILES VACCINÉS ET/OU ALIMENTÉS

(30) Priority: 26.08.2015 BR 102015020632
(43) Date of publication of application: 04.07.2018
(73) Proprietor: CEVA SAÚDE ANIMAL LTDA., 13140-000 Santa Terezinha, Paulínia - SP (BR)
(72) Inventor: BASTOS, César da Silva, 13020060 Campinas - SP (BR)
(74) Representative: Cabinet Becker et Associés
(86) International application number: PCT/BR2016/050198
(87) International publication number: WO 2017/031562

(56) References cited:
- WO-A2-2007/106203
- BR-A- PI0 509 104
- US-A- 5 158 038
- US-A1- 2005 039 688

## Description

### TERMINOLOGY

To better understand the purpose of the subject matter disclosed in and claimed in this patent application, the meaning of some terms richly cited in the body of the descriptive report is shown in which:
- Poultry species: its concept refers to poultry farming that is the breeding of poultry for food production, especially meat and eggs. Among the species raised in poultry, the chicken stands out. On a much smaller scale, other avian species are also raised such as turkeys, ducks, geese, quail and ostriches;
- Matrix: breeding bird, which provides fertile eggs;
- Average size of fertile eggs: the larger the egg, the older the matrix and consequently the greater the contamination of the application procedure for intra egg substances;
- Sanitation: although all equipment uses sodium hypochlorite as a sanitizer, there are other products that may have the same effect in different concentrations, such as: Sodium hypochlorite; Chlorine dioxide and ozone;
- PLC: Programmable Logic Controller is a specialized computer, based on a microprocessor that performs control functions through software developed by the user (each PLC has its own software).
- Substance application module: in which vaccination and or nutrition are performed through injector devices provided with punches and needles for each egg housing niche defined in the incubation tray, where a computerized system releases a vaccine dose, nutrients or nutritional vaccine complex for the needles. A flow structure is provided for the application of substances such as vaccines/nutrients and an independent structure used for the application flow of concentrated sanitizer applied in the disinfection of the needles after the procedure of applying substances.

### FIELD OF APPLICATION

The present title patent and subject of description and claim in this cartouche deals with an inventive solution that finds outstanding benefit in the segment of poultry, notably in the poultry breeding sector.

More specifically, the invention finds particular use when applied in aid of the disinfection operation of components of operating modules of the reproduction system, in particular the module for the substance application in *in ovo* fertile eggs, wherein the disinfection procedure of needles of injecting devices (vaccines, nutrients, or nutritional vaccine complex) is mandatory, but may be extended to all operative modules where there is a need for such operations.

A process of obtaining and managing the volume and concentration of sanitizer optimized for application in a disinfection procedure of an in ovo substance applicator is described in WO 2007/106203 A2.

### DEMAND OF THE INVENTION

In view of the field of application, the applicant has identified the following needs:
- provide a greater reliability and precision in the process of treatment and storage of the water component used in the preparation of the products used for the sterilization procedure through the sanitization of needles used in the injection devices of a substance application module, such as vaccines, nutrient or nutritional vaccine complex;
- provide a greater reliability and precision in the preparation of the disinfection component solution of the *in ovo* vaccination process, such as sodium hypochlorite, commonly used in the sanitization procedure of a substance application module, such as vaccinators; and
- provide a greater assertiveness in the titration calculation of the concentration of the sanitizing solution to be applied in disinfection in the vaccination process; and
- Ensure the biological integrity and safety of the environment of fertile egg handling during the development cycle, notably in the subsequent stages of vaccination/nutrition and breeding;
- Reduction of the cost of sanitizing input;
- Reduce set up time to prepare the volume of concentrated sanitizing solution to be loaded into the substance application module;
- Reduce the risk of handling accidents during the preparation of the concentrated sanitizing solution;
- Reduce the risk of accidents in the loading operation of the sanitizing solution, which is concentrated in the substance application module;

### REQUIREMENTS OF THE INVENTION

In accordance with the demand of the invention, the inventor has designed a process as defined in claim 1.

In addition, the "invention" is provided with industrial applicability, being economically feasible.

### FUNDAMENTALS OF THE TECHNIQUE

In order to provide veracity and to consolidate the explicit context in the topics of the introductory table, an explanation will be presented on the state of the art for the preparation, manipulation and loading of the concentrated sanitizer to be applied in the substance application module, wherein after a critical analysis of these, once evaluated by technicians with expertise in the field, will be able to identify its limiting aspects, thus consolidating the identification of the previously cited demand.

a. About the conventional technique: the conventional procedure for preparing a volume of concentrated sanitizer for use in the disinfection of needles of a substance application module can be considered archaic, since it is carried out in a totally empirical way, where the laborer, in a laboratory environment, receives the preliminary information on the average value of the batch size of fertile eggs that will be taken to the intervention of the substance application module, where in possession of this information, the volume of water to be used, the volume of sanitizer and also the concentration of this sanitizer are calculated.

Then, with the calculations in hand, the professional in possession of a sanitizing reservoir, for example sodium hypochlorite, removes the previously calculated volume and performs a titration procedure to obtain the sanitizer concentration;

Then, with the same calculations in hand the professional in possession of a water reservoir, removes the previously calculated volume of water.

Finally, the professional mixes the volume of concentrated sanitizer with the volume of water, obtaining the volume of the prepared sanitizing concentrate which will feed the substance application module, to effectively promote the disinfection of the set of needles in the post vaccination operation/nutrition.

### b. Identification of problems

Although, a volume of prepared concentrated sanitizer is obtained and its use is effective in the disinfection procedure of the needles of the substance application module, the applicant has identified a number of problems of significant importance.

The archaic procedure of separation, mixing and quality of the water and sanitizing solutions is not sufficient, since there is no proper control of the quality of the same, especially of the water purification, which, if not adequate, leads to the compromise of the entire volume of the concentrated sanitizer.

Still within this scope, the assertiveness in the titration calculation of the concentration of the sanitizing solution to be applied in the disinfection process of the vaccination process is also compromised, since the titration is literature-based on the efficiency of the sanitizer, for example sodium hypochlorite + coefficient of concentration and the operator who manipulates the sanitizer uses this data to define the concentration of the concentrated sanitizer.

In practice, what happens is that the operator works with ready-to-use sanitizers in high concentrations, so that there is no differentiation related to the level of contamination.

In current equipment, water is treated in isolation in relation to the substance application module, without uniformity or control over the treatment process, and subsequently the water is stored in an open environment, thus subject to contamination.

Another aspect to be considered is that water production is not performed on demand, but rather in large batches where the first volume flow logic is the first volume comings out (First In First off - FIFO) is not guaranteed.

Since effective disinfection is not carried out, the integrity and biological safety of the environment of fertile egg handling during subsequent cycles of fertile egg development are noted, notably in the subsequent stages of vaccination/nutrition and breeding;

In turn, the problem of long set-up time for preparation of the volume of concentrated sanitizing solution to be loaded in the substance application module is also considerable, since that solution is prepared in isolation, requiring, once prepared, to be transported to the substance application module, which is on hold, delaying the release of the module to the next vaccination/nutrition cycle;

Depicted from the previous paragraph, it is necessary to transport the concentrated sanitizer to the substance application module, and this brings to light the eminent existence of the risk of accidents during such transport operation; and

Still within the scope of the risk of an operational accident, it is important to bring to light that it exists from the empirical manipulation of the water and the sanitizer during the preparation of the concentrated sanitizing solution.

### PROPOSAL OF THE INVENTION

a. Objective: it is an object of the present invention to provide the list of problems and causes evidenced in the fundamentals of the technique topic, as well as to make feasible the list of needs listed in the demand of the invention topic, and therefore it is pertinent to list:
- Provide a preparation and loading system of concentrated sanitizer whose architecture is integrated with the substance application module;
- Provide a preparation and loading system of prepared sanitizing concentrate whose architecture is automated in all stages, configuring the automated sub-module of water purification, automated sub-module of preparation of concentrated sanitizer and also an automated sub-module for mixing the obtained obtained purified water + concentrated sanitizer; and
- Provide a preparation and loading system of concentrated sanitizer that automatically performs the titration procedure for the correct calculation of the concentration of sanitizer in the mixture to be obtained and used, taking as a paradigm the sanitary need of each batch of fertile eggs to be vaccinated, which in turn is related to the average height of the batch of fertile eggs to be considered.

### DESCRIPTION OF THE FIGURES

To complement the present description in order to obtain a better understanding of the features of the present invention, and in accordance with a preferred practical embodiment thereof, the attached description is accompanied by a set of drawings, wherein:

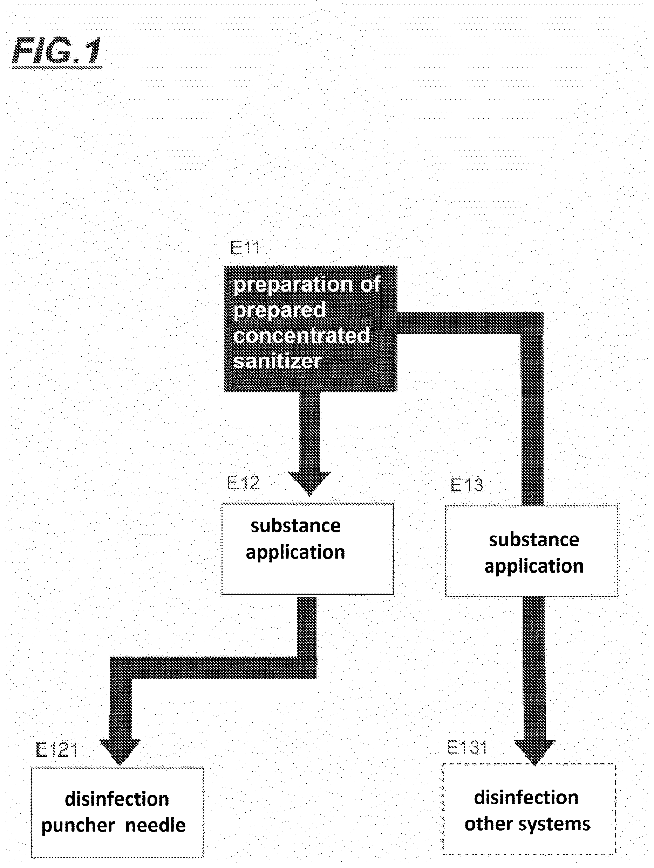

Fig. 1 is an illustrative representation in block diagram form of the macro system for application of concentrated sanitizer in the substance application module and in other modules;
Fig. 2 is an illustrative representation in the form of block diagram of macro architecture of the system for obtaining and managing optimized volume and concentration of sanitizer for the application in the disinfection procedure of an *in ovo substance applicator module* having as a paradigm the information on the average size of the fertile eggs vaccinated and or fed, evidencing its operational modules;
Fig. 3 is an illustrative representation in the form of a block diagram of the macro architecture of the volume and sanitizing concentration and optimization optimized system for the application in the disinfection procedure of an *in ovo substance applicator module*, having as a paradigm the information on the average size of fertile eggs vaccinated and or fed, showing the sub-modules of its operational modules;
Fig. 4a is an illustrative representation in the form of a block diagram of the sub-modules, which make up the operating water purification sub-module of the system for obtaining and managing optimized volume and concentration of sanitizer;
Fig. 4b is an illustrative representation in the form of a block diagram of the devices used to make feasible the sub-modules that make up the operative water purification sub-module of the system for obtaining and managing optimized volume and concentration of sanitizer; and
Fig. 5 is an illustrative representation in the form of a block diagram of the devices used to make feasible the sub-modules of the sanitizing concentrate module and of the purified water mixing module with concentrated sanitizer from the system for obtaining and managing optimized volume and concentration of sanitizer.

### DETAILED DESCRIPTION

The following detailed description should be read and interpreted with reference to the presented drawings, representing a macro level and micro level vision of the system and process of obtaining volume and concentration of sanitizer optimized for the application in the disinfection procedure of a substance applicator module having as a paradigm the information on the average size of the vaccinated and/or fed fertile eggs, and is not intended to limit the scope of the invention, this limited only to the explicit in the context of the claim.

a. State of the art: for a better understanding of the scope of application of the present inventive system, the block diagram for the sanitization system of an operational module of substances application is shown, including details for the operational modules:
- sanitizing solution preparation module (E11), which is effectively the object of the present invention;
- substance application module (E12), whose needle components (E121) of the injection devices are disinfected with the prepared sanitizing concentrate; and
- substance application module (E13), to other devices (E131) receiving disinfection with the prepared sanitizing concentrate.

For the purpose of the present invention, the same is applied to the sanitizing solution preparation module (E11), which is described in detail as concept and operating procedure.

### b. Macro architecture of the inventive system

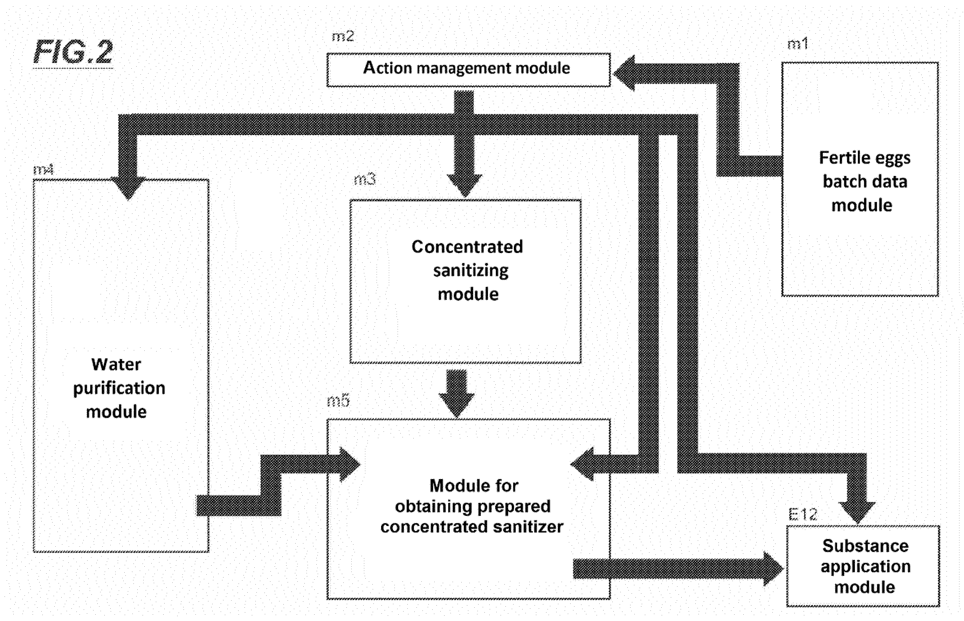

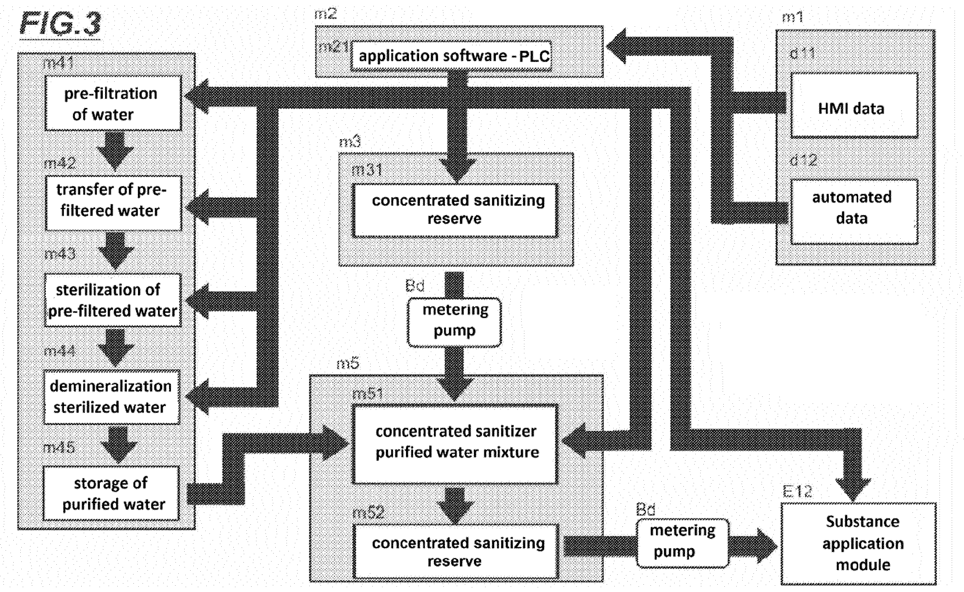

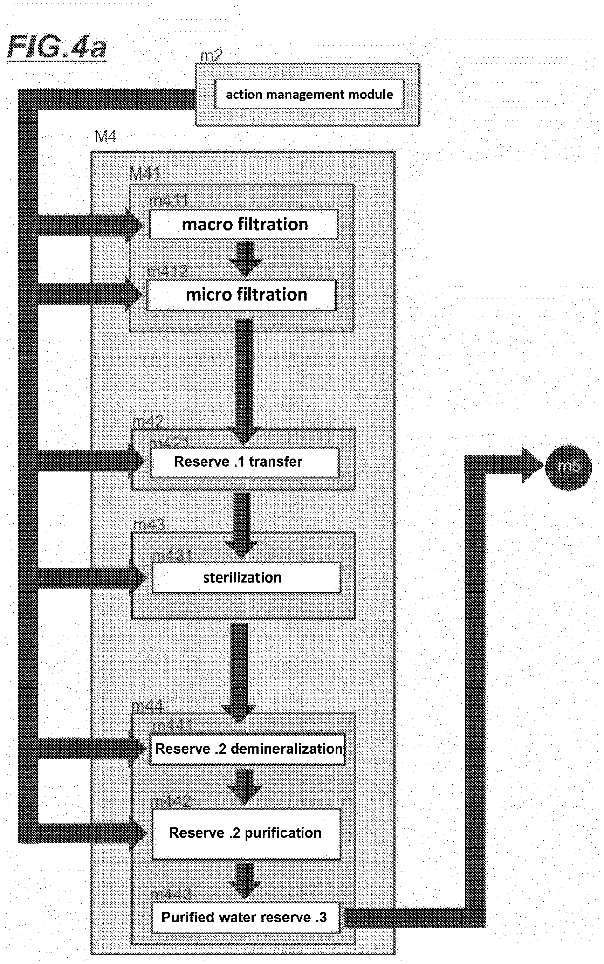

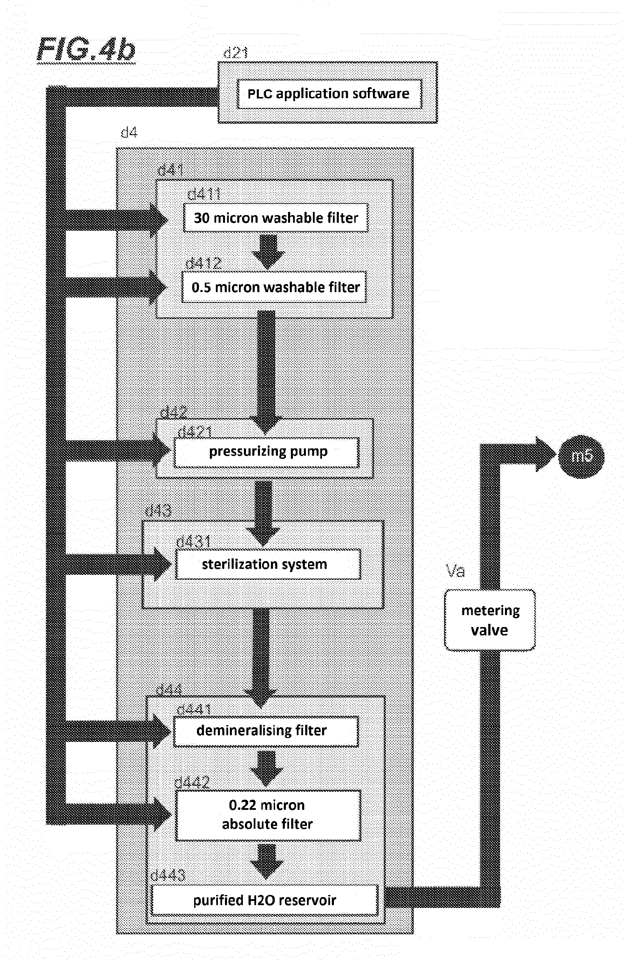

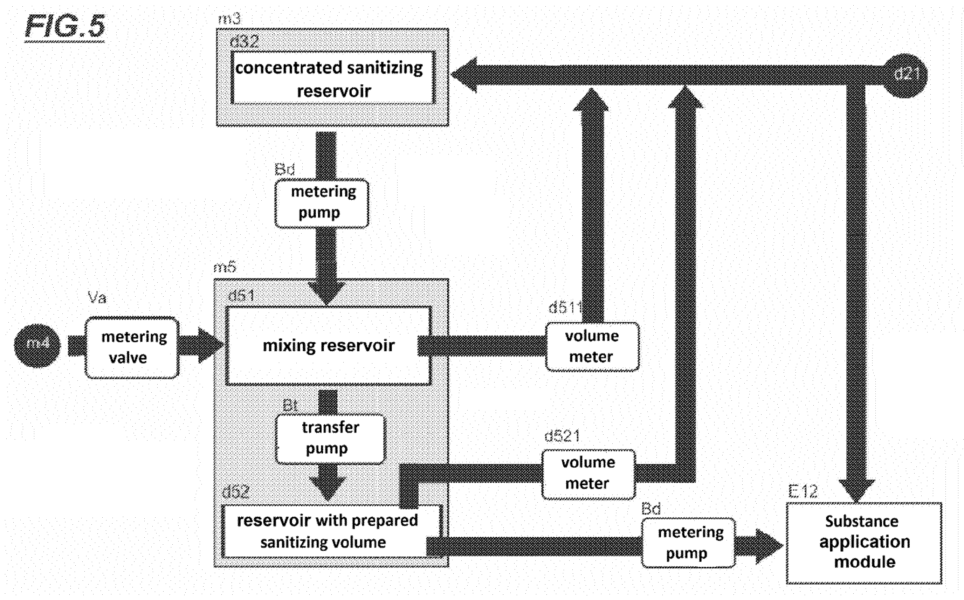

As shown in Fig. 2 it is composed of the following operational modules:
b.1 Fertile egg batch data module (M1), as shown in Fig. 3, is digitally loaded into an operational management system, and such data have two possible sources:
   - Human machine interface data (D11), in which the system operator receives information on the average size of the eggs (Tm1), carried out by means of human observation, through a printed or digital data sheet with information of the incubated egg stock that defines the most likely average classification of eggs as average size of large eggs, average size of medium eggs, and average size of small eggs.
   - Automated fertile egg mean data (D12), where the system operator receives information on the average size of the eggs (Tm2), performed by means of an automated system for calculating the average size of a batch of fertile eggs, through innumerable known technologies, among which the technique disclosed in the Brazilian patent application PI BR No. 10 2015 020511-2 entitled "SYSTEM OF RECOGNITION AND CLASSIFICATION OF THE HEIGHT OF FERTILE EGGS DERIVING FROM THE CANDLING STAGE AND OPERATIONAL PROCEDURE OF ITS SUB-MODULES AND OF APPLICATION MODULES AND BREEDING", which more accurately defines the actual classification of eggs as average size of large eggs, average size of medium eggs, and average size of small eggs.
b.2 Action management module (M2), as shown in Figs. 2 and 3, is formed by an application software (d21), which uses a logic programmer (PLC), where it performs calculations for the variables of the water purification module (M4), the concentrated sanitizer preparation module (M3) and module of purified water mixture + concentrated sanitizer (M5).
b.3 Concentrated sanitizing module (M3), as evidenced in Figs. 3 and 5, it has the function to ensure that a volume of concentrated sanitizer with adequate titration for the age characteristic of the fertile egg batch is obtained and that such information derives from the batch data of fertile eggs (M1) and sent through by the activity management module (M2). For this purpose, the concentrated sanitizing reserve sub-module (m31) is formed, where the volume of concentrated sanitizer (Sa31) is stored in a concentrated sanitizing reservoir (d31);
b.4 Water purification module (M4) has the function to ensure that the water to be used to obtain the batch of the prepared concentrated sanitizer (m52) is devoid of contamination, and for this purpose, it is formed by the following operational sub-modules, see Fig. 3, wherein:
   - Water pre-filtration sub-module (m41): as shown in Figs. 3, 4a and 4b is formed by the sub-modules:
   - Macro filtration sub-module (m411), where it receives from the application software device (d21) the macro variable time control variable information (V411), and initiates the procedure whereby the volume of untreated water passes a first filtration, called macro filtration, performed by a 30 micron washable filter (d411), thus obtaining the volume of macro filtered water (Ag411);
   - Micro filtration sub-module (m412): it receives from the application software device (d21) the micro filtration variable time control information (V412) and initiates the procedure wherein the volume of macro filtered water (Ag411) passes a second filter, called micro filtration, performed by a 05 micron washable filter (d412), thus obtaining the volume of micro filtered water (Ag412);
   - Pre-filtered water transfer sub-module (m42): as shown in Figs. 3, 4a and 4b is formed by the sub-module:
   - Reserve.1 transfer sub-module (m412): wherein it receives from the application software device (d21) information regarding the transfer time variable (V421), wherein by means of a pressurizing pump (d421) the volume of micro filtered water (Ag412) is transferred to the reservoir of the pre-filtered water sterilization sub-module (m43);
   - Pre-filtered water sterilization sub-module (m43): as shown in Figs. 3, 4a and 4b is formed by the sub-modules:
   - Sterilization sub-module (m431): wherein it receives from the software application device (d21) the information of the sterilization control variable (V432) that varies in accordance with the adopted sterilization technology (ozonation and/or reverse osmosis and/or ultraviolet radiation where the latter is chosen as a preferred embodiment because it involves lower energy consumption and has no residue. Immediately the procedure is initiated where the volume of micro filtered water (Ag412) is exposed to a sterilization process, generating a resulting volume of sterilized water (Ag431);
   - Sterilized water demineralization sub-module (m44): as shown in the Figs. 3, 4a and 4b is formed by the sub-module:
   - Reserve .2 demineralization sub-module (m441): where it receives from the application software device (d21) the information of the filtering time variable (V441), and initiates the procedure wherein the volume of sterilized water (Ag431) passes through a demineralization filter (d441), thus obtaining the volume of micro sterilized demineralized water (Ag441);
   - Reserve .2 purification sub-module (m442): where it receives from the application software device (d21) the information of the filtering time control variable (V442), and initiates the procedure whereby the volume of sterilized demineralized water (Ag441) passes through a purification filter, performed by a 0.22 micron absolute filter (d442), thus obtaining the volume of purified water (Ag442);
   - Purified water reserve .3 sub-module (m443): wherein the volume of purified water (Ag442) is stored in a purified water reservoir (d443), notably an airtight reservoir.
b.5 Module for obtaining prepared concentrated sanitizer (M5): has the function of guaranteeing the quality reliability in concentration of the volume of treated concentrated sanitizer, so that it can effectively supply the disinfection procedure of the substance application module (E13), for this purpose is formed by the following operating sub-modules see Figs. 3 and 5, where:
   - Concentrated sanitizer purified water mixture sub-module (m51): wherein it first receives from the application software device (d21) the information of the following mixing variables (V51):
   - Mixing variable (V511), amount of volume of purified water (Ag442) to be mixed;
   - Mixing variable (V512), amount of volume of concentrated sanitizer (Sa31) to be mixed;
      These values are calculated based on values of the desired concentration and initial concentration of the concentrated sanitizing solution.
   - Mixing Variable (V513): mixing time of volume of concentrated sanitizer (Sa31) with volume of purified water (Ag442);
      The mixing procedure is then initiated wherein the desired volume of purified water (Ag442) is transported from the purified water reservoir (d443) to the mixing reservoir (d51), the control of this alimentation is carried out by means of a metering valve (Va) installed in the communicating connection of the purified water reservoir (d443) with the mixing reservoir (d51), wherein the opening control of this metering valve (Va) is performed by the volume metering device (d511), which effectively sends the volume data to the application software (d2), which sends a supply interruption command, see Figs. 4b and 5;
      In the same way, desired volume of concentrated sanitizer (Sa31) is transported from the concentrated sanitizing reservoir (d32) to the mixing recipient (d51), wherein the operational control of the metering pump (Va) is performed by the volume metering device (d511), which effectively sends the volume data to the application software (d2), which sends a supply interruption command, see Fig. 5;
      Finally, the volume of concentrated sanitizer (Sa31) with volume of purified water (Ag442) is obtained, and also the final volume of prepared concentrated sanitizer (Sa51);
   - Prepared concentrated sanitizing reserve sub-module (m52): where the volume of prepared concentrated sanitizer (Sa51) is stored by means of a transfer pump (Bt) in the sanitizing reservoir (d52);
c. Sanitization substance application module (E11): as shown in Figs. 2, 3 and 5, the module receives from the application software device (d21) the volume information of volume of concentrated sanitizer (Sa31), where it then triggers supply from the sanitizing reservoir (d52), the supply control being carried out by the metering pump (Bd) present in the connection between that reservoir and the flow circuit of the substance application module.

The prepared concentrated sanitizing reservoir (d52) has a volume meter (d521), which is useful in determining the prepared volume of concentrated sanitizer (Sa31) inside.

Such volume meter (d521) works with maximum and minimum values, and when the minimum value is reached, the limiting volume data is sent to the application software (d2), which initializes a new operational process for the production of a new prepared volume of concentrated sanitizer (Sa31).

The choice of the preferred embodiment of the invention object of claim in this cartouche and described in this detailing section is provided by way of example only. Changes, modifications, and variations may be made to any other embodiments of the system for managing optimized volume and concentration of sanitizer where changes may be devised by those skilled in the art without, however, diverging from the goal disclosed in patent application, which is exclusively defined by the appended claims.

It is verified by what has been described and illustrated that the process herein claimed conforms to the rules governing the invention patent in the light of the Industrial Property Law, deserving from what has been stated and as a consequence, the respective privilege.

## Claims

1. A process of obtaining and managing the volume and concentration of sanitizer optimized for application in a disinfection of an *in ovo* substance applicator module having, as a paradigm, information on the average size of vaccinated and/or fed fertile eggs, wherein the substance applicator module is composed of a fertile egg batch data module (M1), which provides human-machine interface data (D11), wherein the operator receives information on the average egg size, performed by means of the observation of a printed or digital record with information on a batch of incubated eggs, which in turn is communicated as a data transmitter with an action management module (M2), formed by an application software (d21), which uses a logic programmer (PLC), wherein this software application (d21) sends operational data of a concentrated sanitizing module (M3) formed by a concentrated sanitizing reserve sub-module (m31), this application software (d21) sends data to a water purification module (M4) formed by the sequential sub-modules of the pre-water filtration module (m41), pre-filtered water transfer sub-module (m42), pre-filtered water sterilization sub-module (m43) and of sterilized water demineralization sub-module (m44), wherein this water purification module (M4) feeds the module for obtaining prepared concentrated sanitizer (M5) also with application software command control, wherein this module for obtaining prepared concentrated sanitizer (M5) is formed by sequential sub-modules, namely concentrated sanitizer purified water mixture sub-module (m51), prepared concentrated sanitizing reserve sub-module (m52), also controlled by receiving and sending commands from the application software, where the supply of prepared concentrated sanitizer (Sa51) to the application module is also controlled by application software commands.

2. The process according to claim 1, wherein the fertile egg batch data module (M1) is **characterized in that** it provides automated fertile egg average size data (D12), wherein the operator receives information on the average egg size (Tm2) by means of an automated system of calculation of the average size of a batch of fertile eggs.

3. The process according to claim 1, wherein for the water purification module (M4) the water pre-filtration sub-module (m41) is **characterized in that** it is formed by the sequential sub-modules and macro filtration sub-module (m411), micro filtration sub-module (m412).

4. The process according to claim 3, wherein the macro filtration sub-module (m411) is **characterized in that** it receives the information of the macro filtration time control variable (V411) from the application software device (d21), and initiates the procedure in which the volume of untreated water passes a first filtration, called macro filtration, performed by a 30 micron washable filter (d411), for obtaining the volume of macro filtered water (Ag411).

5. The process according to claim 3, wherein the micro filtration sub-module (m412) is **characterized in that** it receives the information of the micro filtration time control variable (V412) from the application software device (d21), and initiates the procedure in which the volume of macro filtered water (Ag411) passes a second filtration, called micro filtration, performed by a 05 micron washable filter (d412), for obtaining the volume of micro filtered water (Ag412).

6. The process according to claim 1, wherein for the water purification module (M4), the pre-filtered water transfer sub-module (m42) is **characterized in that** it is formed by the reserve .1 transfer sub-module (m421) where it receives the information of the transfer time variable (V421) from the application software device (d21), and by means of a pressurizing pump (d421) the volume of micro filtered water (Ag412) is transferred to the sterilization sub-module (m431).

7. The process according to claim 1, wherein for the water purification module (M4) the pre-filtered water sterilization sub-module (m43) is **characterized in that** it is formed by the sterilization sub-module (m431) receiving from the application software device (d21) the information about the sterilization control variables (V432) to subsequently initiate the procedure in which the volume of micro filtered water (Ag412) is exposed to a sterilization process, generating a resulting volume of sterilized water (Ag431).

8. The process according to claim 7, wherein the sterilization technology is **characterized in that** it is an ozonation technology.

9. The process according to claim 7, wherein the sterilization technology is **characterized in that** it is a reverse osmosis technology.

10. The process according to claim 7, wherein the sterilization technology is **characterized in that** it is an ultraviolet radiation technology.

11. The process according to claim 1, wherein for the water purification module (M4), the sterilized water demineralization sub-module (m44) is **characterized in that** it is formed by the sequential sub-modules, reserve .2 demineralization sub-module (m441), reserve .2 purification sub-module (m442) and purified water reserve .3 sub-module (m443).

12. The process according to claim 11, wherein the reserve .2 demineralization sub-module (m441) is **characterized in that** it receives the information of the filtering time variable (V441) from the application software device (d21), and then initiates the procedure whereby the volume of sterilized water (Ag431) undergoes a demineralization filtration carried out by a demineralized filter (d441), thus obtaining the volume of micro sterilized demineralized water (Ag441).

13. The process according to claim 11, wherein the reserve .2 purification sub-module (m442) is **characterized in that** it receives from the application software device (d21) the information of the filtering time control variable (V442) and initiates the procedure whereby the volume of sterilized demineralized water (Ag441) passes through a purification filter, performed by a 0.22 micron absolute filter (d442), obtaining the volume of purified water (Ag442).

14. The process according to claim 11, wherein the purified water reserve .3 sub-module (m443) is **characterized in that** it receives a volume of purified water (Ag442) which is stored in a purified water reservoir (d443).

15. The process according to claim 14, wherein the purified water reservoir (d443) is **characterized in that** it is an airtight reservoir.

16. The process according to claim 1, wherein for the module for obtaining prepared concentrated sanitizer (M5), the concentrated sanitizer purified water mixture sub-module (m51) is **characterized in that** it receives from the application software device (d21) the information of the mixing variables (V51), mixing variable (V511), amount of volume of purified water (Ag442) to be mixed; mixing variable (V512), amount of volume of concentrated sanitizer (Sa31) to be mixed and mixing variable (V513), as the mixing time of volume of concentrated sanitizer (Sa31) with volume of purified water (Ag442), initiating the mixing procedure, wherein the desired volume of purified water (Ag442) is transported from the purified water reservoir (d443) to the mixture reservoir (d51), wherein the control of this alimentation is carried out by means of a metering valve (Va) installed in the communicating connection of the purified water reservoir (d443) with the mixing reservoir (d51), wherein the opening control of this metering valve (Va) is performed by the volume metering device (d511), which effectively sends the volume data to the application software (d2), which sends a supply interruption command; simultaneously the desired volume of concentrated sanitizer (Sa31) is transported from the concentrated sanitizing reservoir (d31) to the mixing recipient (d51), wherein the operational control of the metering pump (Va) is performed by the volume metering device (d511), which sends the volume data to the application software (d2), which sends a supply interruption command, wherein the volume of concentrated sanitizer (Sa31) with volume of purified water (Ag442) is obtained, and also the final volume of prepared concentrated sanitizer (Sa51).

17. The process according to claim 1, wherein for the module for obtaining prepared concentrated sanitizer (M5), the prepared concentrated sanitizing reserve sub-module (m52) is **characterized in that** the volume of prepared concentrated sanitizer (Sa51) is stored by means of a transfer pump (Bt) in the sanitizing reservoir (d52) with a volume meter (d521).

## Patentansprüche

1. Ein Verfahren zur Gewinnung und Verwaltung des Volumens und der Konzentration eines Entkeimers, der für eine Anwendung bei einer Entkeimung eines *in ovo* Substanzapplikator-Moduls mit beispielsweise Information über die mittlere Größe geimpfter und/oder versorgter befruchteter Eier optimiert ist, wobei der Substanzapplikator aus einem Datenmodul (MI) einer Charge befruchteter Eier besteht, das Mensch-Maschine-Schnittstellendaten (D11) bereitstellt, wobei der Bediener Information über die mittlere Eiergröße erhält, das mithilfe der Beobachtung einer gedruckten oder digitalen Aufzeichnung mit Informationen über einer Charge inkubierter Eier durchgeführt wird, die wiederum als ein Datenüberträger mit einem Maßnahmemodul (M2) in Verbindung steht, das von einer Anwendungssoftware (d21) gebildet wird, die einen Logikprogrammer (PLC) verwendet, wobei diese Software-Anwendung (d21) operative Daten eines konzentrierten Entkeimers-Moduls (M3) sendet, das von einem Reservesubmodul konzentrierten Entkeimers (m31) gebildet ist, wobei diese Anwendungssoftware (d21) Daten zu einem Wasserreinigungsmodul (M4) sendet, das von den sequentiellen Submodulen des Wasservorfiltrationsmoduls (m41), Transfersubmodul vorgefilterten Wassers (m42), Sterilisationssubmodul vorgefilterten Wassers (m43) und Demineralisationssubmodul sterilisierten Wassers (m44) gebildet ist, wobei dieses Wasserreinigungsmodul (M4) das Modul zur Gewinnung hergestellten konzentrierten Entkeimers (MS) auch mit einer Anwendungssoftware-Befehlssteuerung versorgt, wobei dieses Modul zur Gewinnung hergestellten konzentrierten Entkeimers (MS) von sequentiellen Submodulen gebildet wird, nämlich konzentrierter Entkeimer/gereinigtes Wasser-Mischsubmodul (m51), Reservesubmodul hergestellten konzentrierten Entkeimers (m52), gesteuert auch durch Empfangen und Senden von Befehlen der Anwendungssoftware, wo die Zufuhr hergestellten konzentrierten Entkeimers (Sa51) zu dem Anwendungsmodul auch von Befehlen der Anwendungssoftware gesteuert ist.

2. Das Verfahren gemäß Anspruch 1, wobei das Datenmodul der Charge befruchteter Eier (MI) **dadurch gekennzeichnet ist, dass** es automatisierte Daten über die mittlere Größe befruchteter Eier (D12) bereitstellt, wobei der Bediener Informationen über die mittlere Eiergröße (Tm2) mithilfe eines automatisierten Systems zur Berechnung der mittleren Größe einer Charge befruchteter Eier erhält.

3. Das Verfahren gemäß Anspruch 1, wobei für das Wasserreinigungsmodul (M4) das Wasser-Vorfiltrationssubmodul (m41) **dadurch gekennzeichnet ist, dass** es von sequentiellen Submodulen und einem Makrofiltrationssubmodul (m411), einem Mikrofiltrationssubmodul (m412) gebildet ist.

4. Das Verfahren gemäß Anspruch 3, wobei das Makrofiltrationssubmodul (m411) **dadurch gekennzeichnet ist, dass** es die Information der Makrofiltrations-Zeitsteuerungsvariablen (V411) von der Anwendungssoftware-Vorrichtung (d21) empfängt und das Verfahren initiiert, in dem das Volumen unbehandelten Wassers eine erste Filtration passiert, bezeichnet als Makrofiltration, die mit einem waschbaren 30 Mikron Filter (d411) zur Gewinnung des Volumens makrofiltrierten Wassers (Ag411) durchgeführt wird.

5. Das Verfahren gemäß Anspruch 3, wobei das Mikrofiltrationssubmodul (m412) **dadurch gekennzeichnet ist, dass** es die Information der Mikrofiltrations-Zeitsteuerungsvariablen (V412) von der Anwendungssoftware-Vorrichtung (d21) empfängt und das Verfahren initiiert, in dem das Volumen makrofiltrierten Wassers (Ag411) eine zweite Filtration passiert, bezeichnet als Mikrofiltration, die mit einem waschbaren 05 Mikron Filter (d412) zur Gewinnung des Volumens mikrofiltrierten Wassers (Ag412) durchgeführt wird.

6. Das Verfahren gemäß Anspruch 1, wobei für das Wasserreinigungsmodul (M4) das Transfersubmodul vorgefilterten Wassers (m42) **dadurch gekennzeichnet ist, dass** es von dem Reserve 1 Transfersubmodul (m421) gebildet ist, wo es die Information der Transferzeitvariablen (V421) von der Anwendungssoftware-Vorrichtung (d21) empfängt und mithilfe einer Druckpumpe (d421) das Volumen mikrofiltrierten Wassers (Ag412) zu dem Sterilisationssubmodul (m431) transferiert wird.

7. Das Verfahren gemäß Anspruch 1, wobei für das Wasserreinigungsmodul (M4) das Sterilisationssubmodul vorgefilterten Wassers (m43) **dadurch gekennzeichnet ist, dass** es von dem Sterilisationssubmodul (m431) gebildet ist, das von der Anwendungssoftware-Vorrichtung (d21) die Information über die Sterilisationssteuerungsvariablen (V432) empfängt, um anschließend das Verfahren zu initiieren, in dem das Volumen mikrofiltrierten Wassers (Ag421) einem Entkeimungsverfahren exponiert ist, um ein resultierendes Volumen sterilisierten Wassers (Ag431) zu erzeugen.

8. Das Verfahren nach Anspruch 7, wobei die Entkeimungstechnologie **dadurch gekennzeichnet ist, dass** sie eine Ozonisierungstechnologie ist.

9. Das Verfahren gemäß Anspruch 7, wobei die Entkeimungstechnologie **dadurch gekennzeichnet ist, dass** sie eine Umkehrosmosetechnologie ist.

10. Das Verfahren gemäß Anspruch 7, wobei die Entkeimungstechnologie **dadurch gekennzeichnet ist, dass** sie eine Ultraviolettbestrahlungstechnologie ist.

11. Das Verfahren gemäß Anspruch 1, wobei für das Wasserreinigungsmodul (M4) das Demineralisationssubmodul für entkeimtes Wasser (m44) **dadurch gekennzeichnet ist, dass** es von den sequentiellen Submodulen, Reserve .2 Demineralisationssubmodul (m441), Reserve .2 Reinigungssubmodul (m442) und Reserve.3 Submodul für gereinigtes Wasser (m443), gebildet ist.

12. Das Verfahren gemäß Anspruch 11, wobei das Reserve .2 Demineralisationssubmodul (m441) **dadurch gekennzeichnet ist, dass** es die Information der Filterzeitvariablen (V441) von der Anwendungssoftware-Vorrichtung (d21) empfängt und dann das Verfahren initiiert, wodurch das Volumen sterilisierten Wassers (Ag431) einer Demineralisationsfiltration unterzogen wird, die mit einem demineralisierten Filter (d441) durchgeführt wird, wodurch das Volumen mikrosterilisierten demineralisierten Wassers (Ag441) erhalten wird.

13. Das Verfahren gemäß Anspruch 11, wobei das Reserve .2 Reinigungssubmodul (m442) **dadurch gekennzeichnet ist, dass** es die Information der Filterzeitsteuerungsvariablen (V442) von der Anwendungssoftware-Vorrichtung (d21) empfängt und das Verfahren initiiert, wodurch das Volumen sterilisierten demineralisierten Wassers (Ag441) einen Reinigungsfilter passiert, das mit einem absoluten 0,22 Mikron Filter (d442) durchgeführt wird, und das Volumen gereinigten Wassers (Ag442) erhalten wird.

14. Das Verfahren gemäß Anspruch 11, wobei das Reserve .3 Submodul für gereinigtes Wasser (m443) **dadurch gekennzeichnet ist, dass** es ein Volumen gereinigten Wassers (Ag442) aufnimmt, das in einem Reservoir für gereinigtes Wasser (d443) gespeichert wird.

15. Das Verfahren gemäß Anspruch 14, wobei das gereinigte Wasser-Reservoir (d443) **dadurch gekennzeichnet ist, dass** es ein luftdichtes Reservoir ist.

16. Das Verfahren gemäß Anspruch 1, wobei für das Modul zur Gewinnung des hergestellten konzentrierten Entkeimers (MS), das Mischsubmodul von konzentriertem Entkeimer/gereinigtem Wasser (m51) **dadurch gekennzeichnet ist, dass** es von der Anwendungssoftware-Vorrichtung (d21) die Information der Mischvariablen (V51), Mischvariable (V511), Menge an zu mischendem Volumen gereinigten Wassers (Ag442); Mischvariable (V512), Menge an zu mischendem Volumen konzentrierten Entkeimers (Sa31) und Mischvariable (V513) als die Mischzeit vom Volumen konzentrierten Entkeimers (Sa3 1) mit dem Volumen gereinigten Wassers (Ag442) empfängt, das Mischverfahren initiiert, wobei das erwünschte Volumen gereinigten Wassers (A442) von dem Reservoir gereinigten Wassers (d443) zu dem Mischreservoir (d51) transportiert wird, wobei die Steuerung dieser Zufuhr mithilfe eines Dosierventils (Va) erfolgt, das in der Verbindung des Reservoirs gereinigten Wassers (d443) mit dem Mischreservoir (d51) installiert ist, wobei die Steuerung der Öffnung dieses Dosierventils (Va) mit der Volumendosiervorrichtung (d511) durchgeführt wird, die Volumendaten an die Anwendungssoftware (d2) effektiv sendet, die ein Zufuhrunterbrechungsbefehl sendet; gleichzeitig das erwünschte Volumen konzentrierten Entkeimers (Sa31) von dem Reservoir des konzentrierten Entkeimers (d31) zu dem Mischempfänger (d51) transportiert wird, wobei die Betriebssteuerung der Dosierpumpe (Va) durch die Volumendosiervorrichtung (d511) erfolgt, die die Volumendaten an die Anwendungssoftware (d2) sendet, die einen Zufuhrunterbrechungsbefehl sendet, wobei das Volumen konzentrierten Entkeimers (Sa31) mit dem Volumen gereinigten Wassers (Ag442) sowie auch das Endvolumen hergestellten konzentrierten Entkeimers (Sa51) erhalten wird.

17. Das Verfahren gemäß Anspruch 1, wobei für das Modul zur Gewinnung hergestellten konzentrierten Entkeimers (MS) das Reservesubmodul hergestellten konzentrierten Entkeimers (m52) **dadurch gekennzeichnet ist, dass** das Volumen hergestellten konzentrierten Entkeimers (Sa51) mithilfe einer Transferpumpe (Bt) in dem Entkeimerreservoir (d52) mit einem Volumenmesser (d521) gespeichert wird.

## Revendications

1. Procédé d'obtention et de gestion du volume et de la concentration de désinfectant optimisés pour une application dans une désinfection d'un module applicateur de substance in ovo ayant, comme paradigme, des informations sur la taille moyenne d'œufs fertiles vaccinés et/ou nourris, dans lequel le module applicateur de substance est composé d'un module de données de lots d'œufs fertiles (M1), qui fournit des données d'interface homme-machine (D11), dans lequel l'opérateur reçoit des informations sur la taille moyenne des œufs, effectuée au moyen de l'observation d'un enregistrement imprimé ou numérique avec des informations sur un lot d'œufs incubés, qui à son tour est communiqué en tant que transmetteur de données avec un module de gestion d'action (M2), formé par un logiciel d'application (d21), qui utilise un programmeur logique (PLC), dans lequel cette application logicielle (d21) envoie des données opérationnelles d'un module d'assainissement concentré (M3) formé par un sous-module de réserve d'assainissement concentré (m31), ce logiciel d'application (d21) envoie des données à un module de purification d'eau (M4) formé par les sous-modules séquentiels du module de pré-filtration de l'eau (m41), du sous-module de transfert d'eau pré-filtrée (m42), du sous-module de stérilisation de l'eau pré-filtrée (m43) et du sous-module de déminéralisation de l'eau stérilisée (m44), dans lequel ce module de purification d'eau (M4) alimente le module d'obtention du désinfectant concentré préparé (M5) également avec le contrôle de commande du logiciel d'application, dans lequel ce module d'obtention du désinfectant concentré préparé (M5) est formé de sous-modules séquentiels, à savoir concentré sous-module de mélange d'eau purifiée de désinfectant (m51), sous-module de réserve de désinfection concentrée préparée (m52), également commandé par la réception et l'envoi de commandes du logiciel d'application, où l'alimentation en désinfectant concentré préparé (Sa51) au module d'application est également contrôlée par les commandes du logiciel d'application.

2. Procédé selon la revendication 1, dans lequel le module de données de lots d'œufs fertiles (M1) est **caractérisé en ce qu'**il fournit des données automatisées sur la taille moyenne des œufs fertiles (D12), dans lequel l'opérateur reçoit des informations sur la taille moyenne des œufs (Tm2) au moyen d'un système automatisé de calcul de la taille moyenne d'un lot d'œufs fertiles.

3. Procédé selon la revendication 1, dans lequel pour le module de purification d'eau (M4) le sous-module de préfiltration d'eau (m41) est **caractérisé en ce qu'**il est formé par les sous-modules séquentiels et le sous-module de macro filtration (m411), sous - module de microfiltration (m412).

4. Procédé selon la revendication 3, dans lequel le sous-module de macro filtration (m411) est **caractérisé en ce qu'**il reçoit l'information de la variable de contrôle du temps de macro filtration (V411) du dispositif logiciel d'application (d21), et lance la procédure dans laquelle le volume d'eau non traitée passe une première filtration, appelée macro filtration, réalisée par un filtre lavable de 30 microns (d411), pour obtenir le volume d'eau macro filtrée (Ag411).

5. Procédé selon la revendication 3, dans lequel le sous-module de microfiltration (m412) est **caractérisé en ce qu'**il reçoit l'information de la variable de contrôle du temps de microfiltration (V412) du dispositif logiciel d'application (d21), et lance la procédure dans laquelle le volume d'eau macro filtrée (Ag411) passe une seconde filtration, appelée micro filtration, réalisée par un filtre lavable de 05 microns (d412), pour obtenir le volume d'eau micro filtrée (Ag412).

6. Procédé selon la revendication 1, dans lequel pour le module de purification d'eau (M4), le sous-module de transfert d'eau préfiltrée (m42) est **caractérisé en ce qu'**il est formé par le sous-module de transfert de réserve .1 (m421) où il reçoit les informations de la variable de temps de transfert (V421) du dispositif logiciel d'application (d21), et au moyen d'une pompe de pressurisation (d421) le volume d'eau microfiltrée (Ag412) est transféré au sous-module de stérilisation (m431).

7. Procédé selon la revendication 1, dans lequel pour le module de purification d'eau (M4) le sous-module de stérilisation d'eau préfiltrée (m43) est **caractérisé en ce qu'**il est formé par le sous-module de stérilisation (m431) recevant, de l'application dispositif logiciel (d21), les informations sur les variables de contrôle de stérilisation (V432) pour lancer ultérieurement la procédure dans laquelle le volume d'eau microfiltrée (Ag412) est exposé à un processus de stérilisation, générant un volume résultant d'eau stérilisée (Ag431).

8. Procédé selon la revendication 7, dans lequel la technologie de stérilisation est **caractérisée en ce qu'**il s'agit d'une technologie d'ozonation.

9. Procédé selon la revendication 7, dans lequel la technologie de stérilisation est **caractérisée en ce qu'**il s'agit d'une technologie d'osmose inverse.

10. Procédé selon la revendication 7, dans lequel la technologie de stérilisation est **caractérisée en ce qu'**il s'agit d'une technologie de rayonnement ultraviolet.

11. Procédé selon la revendication 1, dans lequel pour le module de purification d'eau (M4), le sous-module de déminéralisation d'eau stérilisée (m44) est **caractérisé en ce qu'**il est formé par les sous-modules séquentiels, réserve .2 sous-module de déminéralisation (m441), réserve .2 sous-module de purification (m442) et réserve d'eau épurée .3 sous-module (m443).

12. Procédé selon la revendication 11, dans lequel le sous-module de déminéralisation de réserve .2 (m441) est **caractérisé en ce qu'**il reçoit l'information de la variable de temps de filtrage (V441) du dispositif logiciel d'application (d21), puis déclenche la procédure dans laquelle le volume d'eau stérilisée (Ag431) subit une filtration de déminéralisation réalisée par un filtre déminéralisé (d441), obtenant ainsi le volume d'eau déminéralisée micro stérilisée (Ag441).

13. Procédé selon la revendication 11, dans lequel le sous-module de purification .2 de réserve (m442) est **caractérisé en ce qu'**il reçoit du dispositif logiciel d'application (d21) l'information de la variable de contrôle du temps de filtrage (V442) et lance la procédure dans laquelle le volume d'eau déminéralisée stérilisée (Ag441) passe à travers un filtre de purification, réalisé par un filtre absolu de 0,22 micron (d442), obtenant le volume d'eau purifiée (Ag442).

14. Procédé selon la revendication 11, dans lequel le sous-module de réserve d'eau purifiée .3 (m443) est **caractérisé en ce qu'**il reçoit un volume d'eau purifiée (Ag442) qui est stocké dans un réservoir d'eau purifiée (d443).

15. Procédé selon la revendication 14, dans lequel le réservoir d'eau purifiée (d443) est **caractérisé en ce qu'**il s'agit d'un réservoir étanche à l'air.

16. Procédé selon la revendication 1, dans lequel pour le module d'obtention du désinfectant concentré préparé (M5), le sous - module de mélange d'eau purifiée de désinfectant concentré (m51) est **caractérisé en ce qu'**il reçoit du dispositif logiciel d'application (d21) les informations des variables de mélange (V51), variable de mélange (V511), quantité de volume d'eau purifiée (Ag442) à mélanger; variable de mélange (V512), quantité de volume de désinfectant concentré (Sa31) à mélanger et variable de mélange (V513), en tant que temps de mélange du volume de désinfectant concentré (Sa31) avec le volume d'eau purifiée (Ag442), lancement de la procédure de mélange , dans laquelle le volume souhaité d'eau purifiée (Ag442) est transporté du réservoir d'eau purifiée (d443) au réservoir de mélange (d51), dans lequel le contrôle de cette alimentation est effectué au moyen d'une vanne de dosage (Va) installée dans le connexion communicante du réservoir d'eau purifiée (d443) avec le réservoir de mélange (d51), dans lequel la commande d'ouverture de cette vanne de dosage (Va) est effectuée par le dispositif de mesure de volume (d511), qui envoie efficacement les données de volume au logiciel d'application (d2), qui envoie une commande d'interruption d'alimentation; simultanément, le volume souhaité de désinfectant concentré (Sa31) est transporté du réservoir de désinfection concentré (d31) au récipient de mélange (d51), dans lequel la commande opérationnelle de la pompe doseuse (Va) est effectuée par le dispositif de mesure de volume (d511), qui envoie les données de volume au logiciel d'application (d2), qui envoie une commande d'interruption d'alimentation, dans laquelle le volume de désinfectant concentré (Sa31) avec le volume d'eau purifiée (Ag442) est obtenu, ainsi que le volume final de désinfectant concentré préparé (Sa51).

17. Procédé selon la revendication 1, dans lequel pour le module d'obtention du désinfectant concentré préparé (M5), le sous-module de réserve désinfectant concentré préparé (m52) est **caractérisé en ce que** le volume de désinfectant concentré préparé (Sa51) est stocké au moyen d'une pompe de transfert (Bt) dans le réservoir de désinfection (d52) avec un débitmètre (d521).
